## Europäisches Patentamt

## European Patent Office

## Office européen des brevets

(19)

(11) Veröffentlichungsnummer: **0 031 408**
**B1**

(12) **EUROPÄISCHE PATENTSCHRIFT**

(45) Veröffentlichungstag der Patentschrift:
11.01.84

(51) Int. Cl.³: **C 22 B 7/00**, C 09 C 1/56

(21) Anmeldenummer: **80106106.0**

(22) Anmeldetag: **08.10.80**

(54) **Verfahren zur Abtrennung von Metallen aus Russ.**

(30) Priorität: **07.11.79 DE 2944916**

(43) Veröffentlichungstag der Anmeldung:
**08.07.81 Patentblatt 81/27**

(45) Bekanntmachung des Hinweises auf die Patenterteilung:
**11.01.84 Patentblatt 84/2**

(84) Benannte Vertragsstaaten:
**BE DE FR GB IT NL**

(56) Entgegenhaltungen:
**DE - A - 2 118 022**
**DE - A - 2 717 303**
**DE - B - 2 515 633**
**US - A - 1 779 856**
**US - A - 2 149 671**
**US - A - 3 384 448**
**US - A - 3 454 363**
**US - A - 3 575 851**

(73) Patentinhaber: **HOECHST AKTIENGESELLSCHAFT,
Postfach 80 03 20, D-6230 Frankfurt am Main 80 (DE)**

(72) Erfinder: **Wolter, Manfred, Dr., Alleestrasse 48,
D-5030 Hürth (DE)**
Erfinder: **Heymer, Gero, Dr., Fasanenaue 12,
D-5042 Erftstadt (DE)**

Verfahren zur Abtrennung von Metallen aus Ruß

Die Erfindung betrifft ein Verfahren zur Abtrennung von Metallen, insbesondere von Eisen und/oder Nickel und/oder Vanadium oder ihren Verbindungen, aus Ruß durch Behandeln einer wäßrigen Suspension des Rußes mit Chlorgas und Abtrennen des Rußes aus der Suspension.

Bei der Verbrennung oder partiellen Vergasung von Öl bzw. Schweröl unter Zufuhr von Luft oder Sauerstoff und gegebenenfalls Wasserdampf entstehen Ruße, die aufgrund des Metallgehaltes des Brennstoffs bzw. Vergasungsrohstoffs zum Teil beträchtliche Mengen an Metallen oder Metallverbindungen enthalten. Typische Metallkomponenten sind Eisen, Vanadium und Nickel, welche im Ruß in einer Menge zwischen etwa 0,1 und 10 Gew.-% enthalten sind, wenn beispielsweise zur Verbrennung oder Vergasung ein bei der Vakuumdestillation von Rohöl anfallender Rückstand eingesetzt wird. Die Beseitigung der bei der Verbrennung eines derartigen Öles entstehenden Ruße durch Verbrennen ist wegen der aufgrund des Metallgehaltes der Ruße erfolgenden Korrosion der Brennkammer problematisch. Abgesehen davon stellt der Metallgehalt im Ruß im Hinblick auf die Rohstoffpreise dieser Metalle einen beträchtlichen Wert dar, so daß es wünschenswert ist, die im Ruß enthaltenen Metalle oder Metallverbindungen daraus abzutrennen und sie einer nutzbringenden Verwendung zuzuführen. Es ist aber auch erwünscht, die Ruße wegen ihrer für bestimmte Anwendungen günstigen Eigenschaften in reiner Form zu gewinnen. Zur Weiterverarbeitung vorgesehene Ruße dürfen nämlich nur einen geringen Gehalt an Metallverunreinigungen aufweisen, um schädliche Nebenwirkungen der Metalle, beispielsweise katalytische Effekte oder Korrosion, auszuschließen.

Aus der DE-A1-2 717 303 ist ein Verfahren zur Wiedergewinnung von Metallen wie Vanadin aus bei der Verbrennung von Öl anfallendem Ruß durch Auslaugen des Rußes und Wiedergewinnung der Metalle aus der Lauge, vorzugsweise durch Flüssig-Flüssig-Extraktion, bekannt. Dabei wird der Ruß mit einer wässerigen Lösung von Schwefelsäure mit einem pH-Wert von 1 bis 2 ausgelaugt und ein Teil des Metallgehaltes extrahiert, wonach der so ausgelaugte Ruß in einem Ofen bei 600 bis 1200° C verbrannt wird. Der Verbrennungsrückstand wird mit einer wäßrigen Lösung von Schwefelsäure mit einem pH-Wert von 0 bis 2 ausgelaugt, um weiteres Metall aus dem Verbrennungsrückstand zu gewinnen. Nachteilig ist bei diesem Verfahren, daß zur Abtrennung der Metalle aus dem Ruß zwei Verfahrensstufen benötigt werden. Außerdem wird in der zweiten Verfahrensstufe der Ruß bis zu einem Ascherückstand verbrannt, so daß eine weitere Verwendung des Rußes ausgeschlossen ist.

Behandelt man eine wässerige Ruß-Suspension mit einem Feststoffgehalt von 0,5 bis 4 Gew.-%, welche durch thermische Umwandlung von Schweröl oder flüssigen bzw. gasförmigen Kohlenwasserstoffen bei Temperaturen zwischen 1200 und 2000° C und Drücken zwischen 1 und 80 bar unter Zufuhr von Luft oder Sauerstoff und gegebenenfalls Wasserdampf sowie anschließendes Waschen des rußhaltigen Gasstromes mit Wasser erhalten wurde (vergleiche DE-B2-2 515 633), mit Schwefelsäure bei pH 1 und 90° C unter Rühren während 24 Stunden, so stellt man fest, daß in dem aus der Suspension isolierten Ruß zwar 90 Gew.-% des Vanadiums, aber nur ca. 50 Gew.-% des Eisens und 30 Gew.-% des Nickels entfernt worden sind. Der Ersatz von Schwefelsäure durch Salzsäure oder Salpetersäure bringt ebenso wie die Zugabe eines Oxidationsmittels wie Wasserstoffperoxid oder Kaliumpermanganat zur schwefelsauren Lösung keine Verbesserung der Löslichkeit der Metalle.

Schließlich ist es aus der US-A-1 779 856 bekannt, aus vanadiumhaltigem Material den gesamten Vanadiumanteil dadurch zu entfernen, daß man das pulverisierte vanadiumhaltige Material mit Wasser zu einem Brei vermischt und durch den Brei ein chlorhaltiges Gas hindurchleitet, welches in Berührung mit Wasser Chlor-Sauerstoff-Verbindungen bildet.

Es ist Aufgabe der vorliegenden Erfindung, ein Verfahren zur Abtrennung von Metallen aus Ruß durch Behandeln einer wäßrigen Suspension des Rußes mit Chlorgas anzugeben, bei welchen neben den Metallverbindungen ein zur anderweitigen Verwendung geeigneter, gereinigter Ruß anfällt. Das wird erfindungsgemäß dadurch erreicht, daß man das Chlorgas in einem 10- bis 100fachen stöchiometrischen Überschuß, bezogen auf den Metallgehalt des Rußes, in die auf eine Temperatur von 30 bis 90° C erhitzte wäßrige Ruß-Suspension einleitet und den Ruß nach dem Abtrennen aus der Suspension trocknet.

Das Verfahren gemäß der Erfindung kann weiterhin auch noch dadurch ausgestaltet sein, daß

a) der in der wäßrigen Suspension befindliche Ruß 0,05 bis 3% Eisen und/oder 0,05 bis 2% Nickel und/oder 0,05 bis 5% Vanadium oder Verbindungen dieser Elemente enthält;

b) der Feststoffgehalt der wäßrigen Ruß-Suspension 0,5 bis 4 Gew.-% beträgt;

c) man das Chlorgas in einem Zeitraum von 15 bis 180 min in die wäßrige Ruß-Suspension einleitet;

d) man der wäßrigen Ruß-Suspension zur Abscheidung des Rußes in körniger Form einen geradkettigen Alkohol mit 4 bis 9 C-Atomen oder einen Methyl- bzw. Äthylester einer aliphatischen Monocarbonsäure mit 2 bis 4 C-Atomen zusetzt;

e) als geradkettiger Alkohol n-Amylalkohol verwendet ist;

f) man der wäßrigen Ruß-Suspension 5 bis 15 g Alkohol oder Ester pro Gramm suspendiertem Ruß zusetzt;

g) man den aus der wäßrigen Suspension abgetrennten Ruß durch Erhitzen auf 150 bis 350° C von anhaftendem Wasser und Alkohol bzw. Ester befreit.

Wird beim Verfahren gemäß der Erfindung ein Ruß verwendet, der durch thermische Umwandlung von unter Normalbedingungen flüssigen oder gasförmigen Kohlenwasserstoffen in Gegenwart von Sauerstoff oder sauerstoffhaltigen Gasen und gegebenenfalls Wasserdampf bei Temperaturen von etwa 1200 bis 2000°C und Drücken von etwa 1 bis 80 bar erhalten wurde, so fällt bedingt durch die Arbeitsweise zur Abtrennung des Rußes aus dem rußhaltigen Gasstrom mit Hilfe von Wasser der Ruß als wäßrige Suspension mit einem Feststoffgehalt von etwa 0,5 bis 4 Gew.-% an. In diese Ruß-Suspension leitet man das Chlorgas in der etwa 10- bis 100fachen stöchiometrisch erforderlichen Menge, bezogen auf den Metallgehalt des Rußes, ein, wobei das Chlorgas in einem Zeitraum von etwa 15 bis 180 Minuten in die wäßrige Ruß-Suspension eingeleitet werden kann. Dieser Maßnahme liegt die Annahme zugrunde, daß die Metalle im Ruß aufgrund der stark reduzierenden Umgebung im nullwertigen Zustand, d. h. elementar vorliegen und durch das zugeführte Chlor oxidiert werden. Dabei wird Fe zu $Fe^{3+}$, V zu $V^{5+}$ und Ni zu $Ni^{2+}$ oxidiert. Liegt nur ein Teil der Metalle elementar vor und ein anderer Teil in Form von Verbindungen, beispielsweise als Sulfide, so ist auch unter solchen Voraussetzungen stets ein $Cl_2$-Überschuß erforderlich.

Das Verfahren gemäß der Erfindung kann weiterhin vorteilhaft auch auf Ruße angewandt werden, die aus dem Vergasungsprozeß bzw. aus den Abgasen der Verbrennung zunächst in pulveriger freifließender Form ohne Vorbehandlung isoliert wurden und für die Weiterverwendung einen zu hohen Metallgehalt aufweisen. Sie müssen dann lediglich in Wasser suspendiert werden, wobei eine Feststoffkonzentration zwischen 5 und 30 g/l Suspension empfehlenswert ist. Bei höheren Konzentrationen wird aufgrund der hohen Viskosität solcher wäßrigen Ruß-Suspensionen das Rühren oder Pumpen stark erschwert und ebenso die gleichmäßige Durchdringung mit Chlorgas behindert.

Setzt man beim erfindungsgemäßen Verfahren der wäßrigen Ruß-Suspension einen geradkettigen Alkohol oder einen Methyl- bzw. Äthylester einer aliphatischen Monocarbonsäure mit 2 bis 4 C-Atomen zu, so sammelt sich der Ruß nach einer Rührzeit von 1 bis 3 Minuten als körniges Material an der Wasseroberfläche an und kann ohne Schwierigkeiten beispielsweise durch Filtration isoliert werden. Das so gewonnene Material enthält ca. 10 Gew.-% Ruß, 30 bis 40 Gew.-% Wasser und 50 bis 60 Gew.-% Alkohol. Es wird anschließend zur Verdampfung von Alkohol und Wasser auf etwa 150 bis 350° C erhitzt, wobei nach Kondensation des Dampfes und Trennung der wäßrigen und alkoholischen Phase der nun mit Wasser gesättigte Alkohol wieder zur Abtrennung des Rußes verwendet werden kann. Das kondensierte Wasser, das stets etwa Alkohol gelöst enthält, leitet man als Abwasser ab. Aus dem Filtrat der Rußabtrennung können anschließend die Metalle bzw. deren Verbindungen nach bekannten Verfahren, beispielsweise durch Flüssig-Flüssig-Extraktion (vgl. C. HANSON: »Recent Advances in Liquid-Liquid-Extraction«, Pergamon Press, Oxford 1971) erhalten werden.

Die Durchführung des Verfahrens der Erfindung kann diskontinuierlich, z. B. in einem Rührkessel erfolgen oder aber auch kontinuierlich, wobei man vorteilhaft zur Durchdringung der wässerigen Suspension mit Chlorgas eine Blasensäule oder einen mit Füllkörpern gefüllten Waschturm und zur nachfolgenden Abtrennung des Rußes ein geeignetes Rührgefäß verwendet.

Das Verfahren der Erfindung ist insofern technisch fortschrittlich, als in einer Verfahrensstufe 90 bis 95% des Eisens und Vanadiums und 98% des Nickels aus dem Ruß entfernt werden können. Außerdem wird ein Ruß zurückgewonnen, der aufgrund seiner guten Eigenschaften vielfältig verwendet werden kann. Schließlich wird durch Einsatz bestimmter Alkohole und Ester zur Abscheidung des Rußes aus der wäßrigen Ruß-Suspension ein körniges Produkt erzielt, das sich aus der organisch/wässerigen Phase ohne Schwierigkeiten beispielsweise durch Filtration abtrennen läßt.

Beispiel 1

(Vergleichsbeispiel)

Eine wäßrige Ruß-Suspension mit 0,6 Gew.-% Ruß, welche bei der Vergasung von Schweröl bei 1500°C und 60 bar durch Auswaschen des rußhaltigen Gasstromes erhalten wurde und einen Ruß mit einem Metallgehalt von 4500 ppm Fe, 3200 ppm V und 6500 ppm Ni enthielt, wurde mit soviel Schwefelsäure versetzt, daß die Suspension 10 Gew.-% Schwefelsäure aufwies. Nach dem Erhitzen der Ruß-Suspension auf 90°C wurde bei dieser Temperatur 24 h gerührt und danach der Ruß durch Hinzufügen von 10 g n-Amylalkohol/g Ruß vom Wasser abgeschieden und abfiltriert. Nach Abtreiben von Alkohol und Wasser aus dem Filterrückstand wurde ein Ruß erhalten, der noch 2100 ppm Fe, 290 ppm V und 4500 ppm Ni enthielt.

Beispiel 2

(Gemäß der Erfindung)

In 4 l einer wäßrigen Ruß-Suspension mit 0,6 Gew.-% Feststoffgehalt, wobei der Ruß 6300 ppm Fe, 2500 ppm V und 5800 ppm Ni enthielt, wurden nach Erwärmen auf 70 bis 80°C unter Rühren innerhalb von einer Stunde 20 l Chlorgas, was einem 90fachen stöchiometrischen Überschuß an Chlor entspricht, eingeleitet und anschließend der Ruß durch Hinzufügen von 10 g n-Amylalkohol/g Ruß aus der wäßrigen Phase angeschieden. Nach Abfiltrieren des Rußes und Abtreiben von Alkohol und Wasser bei einer Temperatur von 200°C wurde ein Ruß erhalten, welcher 200 ppm Fe, 300 ppm V und 170 ppm Ni enthielt.

### Beispiel 3

#### (Gemäß der Erfindung)

Es wurde analog Beispiel 2 verfahren. Lediglich anstelle des n-Amylalkohols wurden 8 g Essigsäuremethylester/g Ruß verwendet. Der von Ester und Wasser befreite Ruß enthielt 220 ppm Fe, 350 ppm V und 180 ppm Ni.

### Beispiel 4

#### (Gemäß der Erfindung)

Es wurde analog Beispiel 2 verfahren. Es wurden jedoch anstelle von 20 l/h Chlorgas nur 10 l/h, entsprechend einem ca. 45fachen stöchiometrischen Überschuß, in die Ruß-Suspension eingeleitet. Der von Wasser und Alkohol befreite Ruß enthielt 440 ppm Fe, 330 ppm V und 190 ppm Ni.

### Beispiel 5

#### (Gemäß der Erfindung)

In 4 l einer wässerigen Ru-Suspension mit einem Feststoffgehalt von 15 g/l, die durch Einrühren von Ruß, der aus einem bei der Vergasung von Schweröl entstehenden Gasstrom als freifließendes Material isoliert worden war und einen Gehalt von 0,42% Fe, 1,05% V und 0,77% Ni aufwies, hergestellt worden war, wurden bei 80°C eine Stunde Chlorgas entsprechend einem 10fachen stöchiometrischen Überschuß eingeleitet. Anschließend wurden 15 g n-Amylalkohol/g Ruß hinzugefügt und der Ruß als körniges Material durch Filtration abgetrennt. Das von Wasser und Alkohol bei einer Temperatur von 200°C befreite Produkt enthielt 240 ppm Fe, 540 ppm V und 110 ppm Ni.

### Patentansprüche

1. Verfahren zur Abtrennung von Metallen, insbesondere von Eisen und/oder Nickel und/oder Vanadium oder ihren Verbindungen, aus Ruß durch Behandeln einer wäßrigen Suspension des Rußes mit Chlorgas und Abtrennen des Rußes aus der Suspension, dadurch gekennzeichnet, daß man das Chlorgas in einem 10- bis 100fachen stöchiometrischen Überschuß, bezogen auf den Metallgehalt des Rußes, in die auf eine Temperatur von 30 bis 90°C erhitzte wäßrige Ruß-Suspension einleitet und den Ruß nach dem Abtrennen aus der Suspension trocknet.

2. Verfahren nach Anspruch 1, dadurch gekennzeichnet, daß der in der wäßrigen Suspension befindliche Ruß 0,05 bis 3% Eisen und/oder 0,05 bis 2% Nickel und/oder 0,05 bis 5% Vanadium oder Verbindungen dieser Elemente enthält.

3. Verfahren nach Anspruch 1 oder 2, dadurch gekennzeichnet, daß der Feststoffgehalt der wäßrigen Ruß-Suspension 0,5 bis 4 Gew.-% beträgt.

4. Verfahren nach einem der Ansprüche 1 bis 3, dadurch gekennzeichnet, daß man das Chlorgas in einem Zeitraum von 15 bis 180 min in die wäßrige Ruß-Suspension einleitet.

5. Verfahren nach einem der Ansprüche 1 bis 4, dadurch gekennzeichnet, daß man der wäßrigen Ruß-Suspension zur Abscheidung des Rußes in körniger Form einen geradkettigen Alkohol mit 4 bis 9 C-Atomen oder einen Methyl- bzw. Äthylester einer aliphatischen Monocarbonsäure mit 2 bis 4 C-Atomen zusetzt.

6. Verfahren nach Anspruch 5, dadurch gekennzeichnet, daß als geradkettiger Alkohol n-Amylalkohol verwendet ist.

7. Verfahren nach Anspruch 5 oder 6, dadurch gekennzeichnet, daß man der wäßrigen Ruß-Suspension 5 bis 15 g Alkohol oder Ester pro Gramm suspendiertem Ruß zusetzt.

8. Verfahren nach einem der Ansprüche 1 bis 7, dadurch gekennzeichnet, daß man den aus der wäßrigen Suspension abgetrennten Ruß durch Erhitzen auf 150 bis 350°C von anhaftendem Wasser und Alkohol bzw. Ester befreit.

### Claims

1. Process for the removal of metals, especially of iron and/or nickel and/or vanadium ot their compounds, from carbon black, by treating an aqueous suspension of the carbon black with chlorine gas, and separating the carbon black from the suspension, which comprises: introducing a 10 to 100 times stoichiometric excess of chlorine gas, based on the metal content of the carbon black, into the aqueous suspension of the carbon black heated to a temperature of 30 to 90°C; separating the carbon black from the aqueous suspension; and drying the carbon black.

2. Process as claimed in claim 1, wherein the carbon black present in the aqueous suspension contains 0.05 to 3% of iron and/or 0.05 to 2% of nickel and/or 0.05 to 5% of vanadium, or compounds of these elements.

3. Process as claimed in claim 1 or 2, wherein the solid matter content of the aqueous carbon black suspension is 0.5 to 4 weight%.

4. Process as claimed in any of claims 1 to 3, wherein the chlorine gas is passed into the aqueous carbon black suspension over a period of 15 to 180 minutes.

5. Process as claimed in any of claims 1 to 4, wherein the carbon black is separated in the form of granular material by admixing the aqueous carbon black suspension with a straight-chain alcohol having 4 to 9-C-atoms or a methyl or ethyl ester of an aliphatic monocarboxylic acid having 2 to 4 C-atoms.

6. Process as claimed in claim 5, wherein n-amyl alcohol is used as the straight-chain alcohol.

7. Process as claimed in claim 5 or 6, wherein the aqueous carbon black suspension is admixed with 5 to 15 g of alcohol or ester per gram of suspended carbon black.

8. Process as claimed in any of claims 1 to 7, wherein the carbon black separated from the aqueous suspension is freed from adhering water, alcohol or ester, by heating it to $150 - 350°$ C.

## Revendications

1. Procédé de séparation de métaux, en particulier de fer et/ou de nickel et/ou de vanadium, ou de leurs composés à partir de noir de fumée par traitement d'une suspension aqueuse de noir de fumée par le chlore gazeux, puis séparation du noir de fumée de la suspension, caractérisé en ce que l'on fait passer à travers la suspension aqueuse de noir de fumée chauffée à $30 - 90°$ C un excès de chlore gazeux de 10 à 100 fois la quantité stoechiométrique, par rapport à la teneur en métaux du noir de fumée, et on sèche le noir de fumée après sa séparation de la suspension.

2. Procédé selon la revendication 1, caractérisé en ce que le noir de fumée présent dans la suspension aqueuse contient $0,05 - 3\%$ de fer et/ou $0,05 - 2\%$ de nickel et/ou $0,05 - 5\%$ de vanadium ou des composés de ces éléments.

3. Procédé selon la revendication 1 ou 2, caractérisé en ce que la suspension aqueuse de noir de fumée contient $0,5 - 4\%$ en poids de matières solides.

4. Procédé selon l'une des revendications 1 à 3, caractérisé en ce que l'on fait passer le chlore gazeux dans la suspension aqueuse de noir de fumée pendant 15 à 180 minutes.

5. Procédé selon l'une des revendications 1 à 4, caractérisé en ce que, pour séparer le noir de fumée sous forme de granulés, on ajoute à la suspension aqueuse de noir de fumée un alcool à chaîne droite en $C_4 - C_9$ ou un ester éthylique ou méthylique d'un acide monocarboxylique aliphatique en $C_2 - C_4$.

6. Procédé selon la revendication 5, caractérisé en ce que l'on utilise comme alcool à chaîne droite l'alcool n-amylique.

7. Procédé selon la revendication 5 ou 6, caractérisé en ce qu'on ajoute à la suspension aqueuse de noir de fumée $5 - 15$ g d'alcool ou d'ester par g de noir de fumée mis en suspension.

8. Procédé selon l'une des revendications 1 à 7, caractérisé en ce qu'on élimine par chauffage à $150 - 350°$ C l'eau incluse et l'alcool ou l'ester du noir de fumée séparé de la suspension aqueuse.